# EUROPEAN PATENT SPECIFICATION

(11) **EP 3 115 286 B1**
(45) Date of publication and mention of the grant of the patent: **13.05.2020**
(21) Application number: 16178117.4
(22) Date of filing: 06.07.2016
(51) Int. Cl.: B62J 6/02, B62M 7/04, B62J 17/02, B60Q 1/00

(54) **STRADDLED VEHICLE**
GRÄTSCHSITZFAHRZEUG
VÉHICULE MONTÉ À CALIFOURCHON

(30) Priority: 10.07.2015 JP 2015138975
(43) Date of publication of application: 11.01.2017
(73) Proprietor: Yamaha Hatsudoki Kabushiki Kaisha, Iwata-shi, Shizuoka 438-8501 (JP)
(72) Inventor: RUEANGRIT, Kengkla, 10540 Samutprakarn (TH); KAEONARONG, Prawit, 10540 Samutprakarn (TH)
(74) Representative: Grünecker Patent- und Rechtsanwälte PartG mbB

(56) References cited:
- EP-A1- 1 661 798
- EP-A1- 2 657 076
- EP-A1- 2 682 331
- EP-A2- 0 894 664
- JP-A- 2002 216 509
- JP-A- 2015 030 329
- US-A1- 2010 195 341

## Description

The present invention relates to a straddled vehicle that includes a headlamp provided with an LED (light-emitting diode) light source.

JP 2009-73262 A discloses a motorcycle which is an example of a straddled vehicle. A headlamp of the motorcycle includes a low beam lamp that includes three LED light sources, a high beam lamp that includes two LED light sources, and an outer lens covering the high beam lamp and the low beam lamp from the front thereof.

The low beam lamp is disposed above the high beam lamp. A width of the low beam lamp is wider than a width of the high beam lamp. At least a portion of the low beam lamp and at least a portion of the high beam lamp are positioned at a vehicle center in a vehicle width direction. The headlamp is mounted on a front fork. When the front fork rotates around a steering shaft in accordance with an operation of a steering handle, the headlamp also rotates around the steering shaft. An example of a motorcycle where the headlamp is instead mounted on the frame is disclosed in EP 1 661 798 A1. Here, in a headlamp unit having a high beam lamp and a low beam lamp arranged vertically, the high beam lamp and the low beam lamp are disposed on an upper portion and a lower portion, respectively. Further, an area between the high beam lamp and the low beam lamp is covered with a lamp to lamp transverse portion of a front cowl.

An LED light source is more compact and lightweight than a light bulb. An LED headlamp that includes an LED light source is thus more compact than a headlamp that includes a bulb. The headlamp of JP 2009-73262 A is an LED headlamp and is formed to be extremely thin in a vehicle front-rear direction.

The front fork of JP 2009-73262 A is supported by a head pipe via the steering shaft. A front wheel is supported at a lower end portion of the front fork. When the steering handle is operated, the front fork and the front wheel pivot together around the steering shaft. The headlamp is mounted on the front fork. The headlamp thus pivots around the steering shaft together with the front fork,

In a case where the headlamp pivots together with the front fork, if the headlamp is compact, an inertial moment of the headlamp is reduced. The headlamp of JP 2009-73262 A is an LED headlamp and formed to be extremely thin in the vehicle front-rear direction, and therefore the inertial moment of the headlamp is reduced.

Also, the headlamp of JP 2009-73262 A has the high beam lamp and the low beam lamp. At least a portion of the low beam lamp and at least a portion of the high beam lamp are positioned at the vehicle center in the vehicle width direction. The high beam lamp and the low beam lamp are thus disposed closer to the steering shaft not only in the vehicle front-rear direction but also in the vehicle width direction and the inertial moment of the headlamp is thus reduced further.

Also with JP 2009-73262 A, the dimension of the low beam lamp in the vehicle width direction is greater than the dimension of the high beam lamp in the vehicle width direction. Light from a light source spreads with distance from the light source. The low beam lamp illuminates a range closer to the vehicle than the high beam lamp. The light from the low beam lamp is thus smaller in spread than the light from the high beam lamp. In consideration of the characteristic of the low beam lamp that illuminates a range close to the vehicle, an intended range can be illuminated by a simple structure if the dimension of the low beam lamp in the vehicle width direction is large.

JP 2015030329 A discloses the preamble of claim 1.

The inventors faced the following issue as a result of examining the functions of the high beam lamp and the low beam lamp.

The high beam lamp is lit up when the low beam lamp is lighting. That is, the low beam lamp may be lit alone even when the high beam lamp is not lit. However, the high beam lamp is not lit up when the low beam lamp is not lit.

A rider can check whether or not the headlamp is lighting based on whether or not the front of the vehicle is illuminated. However, when the high beam lamp is lit, the low beam lamp is also lit and there may thus be cases where it is difficult to judge whether or not the high beam lamp is lit based on whether or not the front of the vehicle is illuminated. This is because, even if the high beam lamp is not lit, the front of the vehicle is illuminated by the low beam lamp.

It may be considered that because the range illuminated by the high beam lamp and the range illuminated by the low beam lamp differ from each other, the rider can check whether or not the high beam lamp is lighting by looking at the illuminated range. However, in a case where the vehicle is traveling on a road surface with repeated irregularities, etc., the illumination range of the high beam lamp moves up and down repeatedly. In such road surface circumstances, it may be difficult to check whether or not the high beam lamp is lit based on the illumination range.

The inventors thus examined a method by which the lighting of the high beam lamp can be checked more simply.

With the headlamp of JP 2009-73262 A, the low beam lamp, that is lighting constantly, is disposed above the high beam lamp and therefore a distance from the rider to the high beam lamp in a vehicle up-down direction is long. It is therefore difficult for the rider to check the lighting state of the high beam lamp by looking at the high beam lamp.

The inventors thus first considered disposing the high beam lamp above the low beam lamp to make it easier for the rider to check the lighting state of the high beam lamp. However, a sufficient effect could not be obtained by just this means. The inventors examined the cause.

When, as in JP 2009-73262 A, the high beam lamp and the low beam lamp are covered by a single outer lens, it may appear as if the high beam lamp is lit even if the high beam lamp is not lit. This is because the outer lens is illuminated by the light of the low beam lamp. It was thus found that it is difficult to check the lighting of the high beam lamp by simply disposing the high beam lamp above the low beam lamp.

In addition, it was found that with the headlamp of JP 2009-73262 A, it is difficult for the rider to check the lighting state of the high beam lamp by looking at the high beam lamp.

Specifically, when the rider is driving the straddled vehicle, the face of the rider is directed to the front of the straddled vehicle. For the rider to check the lighting of the high beam lamp during travel of the straddled vehicle, the rider must move his/her line of sight toward the high beam lamp.

In most cases where the headlamp is disposed at a position forward separated to the front from the rider's riding position, the high beam lamp will become visible to the rider's eyes when the rider lowers his/her line of sight. On the other hand, if the headlamp is close to the rider's riding position in the vehicle front-rear direction, the rider must lower his/her line of sight while moving it toward the rider in order to see the high beam lamp. Therefore, an amount of movement of the rider's line of sight when the rider who is looking forward looks at the high beam lamp is smaller when the headlamp is thick in the vehicle front-rear direction than when the headlamp is thin in the vehicle front-rear direction.

However, with JP 2009-73262 A, the headlamp is formed to be extremely thin in the vehicle front-rear direction and therefore the amount of movement of the rider's line of sight is large and it is difficult to check the lighting of the high beam lamp. Especially, the head pipe and the steering shaft extend forward and downward and therefore if the high beam lamp is disposed higher than the low beam lamp, the high beam lamp is disposed closer to the rider's riding position. Further, the headlamp of JP 2009-73262 A is thin in the vehicle front-rear direction and therefore the high beam lamp is disposed even closer to the rider's riding position. If the headlamp is too close to the rider's riding position, the movement amount of the rider's line of sight will be large and it will thus be difficult to check the lighting of the high beam lamp.

Also, when at least a portion of the high beam lamp and at least a portion of the low beam lamp are positioned at the vehicle center to reduce the inertial moment, the high beam lamp and the low beam lamp are disposed closer to each other in the vehicle width direction. Checking of the lighting of the high beam lamp is thus made difficult by the influence of the light of the low beam lamp. The light of the low beam lamp and the light of the high beam lamp interfere readily especially when the dimension of the low beam lamp in the vehicle width direction is greater than the dimension of the high beam lamp in the vehicle width direction. Checking of the lighting of the high beam lamp is thus made even more difficult.

An object of the present invention is to provide a straddled vehicle including a headlamp that pivots together with a front fork and with which a lighting state of a high beam lamp can be checked readily even while using an LED light source to achieve reduction of size of the headlamp, reduction of inertial moment, and simplification of the structures of the high beam lamp and a low beam lamp. This object is achieved by a straddled vehicle according to claim 1. Preferred embodiments are laid down in the dependent claims.

A preferred embodiment provides a straddled vehicle including a head pipe, disposed at a vehicle center in a vehicle width direction and extending rearward and upward, a main seat, disposed further to the rear than the head pipe and on which a rider sits, a front fork including a steering shaft that is inserted in the head pipe and extends rearward and upward, a front wheel supported by the front fork, a steering handle operated by the rider to pivot the front fork around the steering shaft, and a headlamp, at least a portion of which is disposed in front of the head pipe.

The headlamp includes a high beam lamp, a low beam lamp, at least a portion of which is disposed below the high beam lamp, and a lamp cover, at least a portion of which is disposed in front of the head pipe and in which the high beam lamp and the low beam lamp are disposed. The high beam lamp includes a high beam LED light source and a high beam cover, disposed in front of the high beam LED light source and through which light of the high beam LED light source is transmitted. The low beam lamp includes a low beam LED light source and a low beam cover, disposed in front of the low beam LED light source and through which light of the low beam LED light source is transmitted.

In a front view of the straddled vehicle, a dimension of the high beam lamp in a vehicle width direction is smaller than a dimension of the low beam lamp in the vehicle width direction. At least a portion of the high beam lamp and at least a portion of the low beam lamp are positioned at the vehicle center. The headlamp is mounted on the front fork such that the headlamp pivots together with the front fork in accordance with an operation of the steering handle. The lamp cover includes an extension portion, which is disposed in front of the high beam cover in a plan view of the straddled vehicle and through which light is not transmitted.

With this arrangement, when the steering handle is operated, the headlamp pivots together with the front fork around the steering shaft. The headlamp includes the high beam lamp and the low beam lamp. The high beam lamp and the low beam lamp are both LED lamps that include LED light sources. The headlamp can thus be made compact and an inertial moment of the headlamp can be reduced.

Further, at least a portion of the low beam lamp and at least a portion of the high beam lamp are positioned at the vehicle center in the vehicle width direction. The high beam lamp and the low beam lamp are thus disposed closer to the steering shaft not only in a vehicle front-rear direction but also in the vehicle width direction. The inertial moment of the headlamp can thus be reduced further.

Also, light from a light source spreads as the distance from the light source increases. The low beam lamp illuminates a range closer to the vehicle than the high beam lamp. The light from the low beam lamp is thus smaller in spread than the light from the high beam lamp. The dimension of the low beam lamp in the vehicle width direction is greater than the dimension of the high beam lamp in the vehicle width direction. The low beam lamp can thus illuminate an intended range reliably with a simple structure.

By making the headlamp thin in the vehicle front-rear direction, the headlamp can be disposed closer to a rider's riding position. Further, the high beam lamp is disposed close to the rider sitting on a main seat because the head pipe and the steering shaft extend rearward and upward, and the high beam lamp is disposed above the low beam lamp. In a case where the rider checks whether or not the high beam lamp is lighting by looking at the high beam lamp, if the headlamp is too close to the rider's riding position, the rider might have difficulty checking the lighting state with the conventional headlamp, because a movement amount of the rider's line of sight will be large.

With the preferred embodiment of the present invention, the lamp cover is provided with the extension portion, through which light is not transmitted. The light of the low beam lamp is not transmitted through the extension portion. Therefore, when the high beam lamp is not lit and the low beam lamp is lit, an outer surface of the extension portion will not shine. On the other hand, the extension portion is disposed in front of the high beam cover in the plan view of the straddled vehicle and therefore if the rider looks at the high beam lamp from thereabove when the high beam lamp is lit, not only the high beam cover but the outer surface of the extension portion will also appear to shine because the light of the high beam lamp is reflected at the outer surface of the extension portion.

The rider can thus check whether or not the high beam lamp is lighting by looking at the state of at least one of the high beam cover and the extension portion. Further, by providing the extension portion, a portion by which whether or not the high beam lamp is lit is judged is enlarged in area, enabling the rider to readily check the lighting state of the high beam lamp. Yet further, the extension portion that enables the lighting state of the high beam lamp to be checked is disposed in front of the high beam cover in the plan view of the straddled vehicle and therefore the rider can judge whether or not the high beam lamp is lit without looking at the high beam cover. The movement amount of the rider's line of sight can thus be reduced.

In the preferred embodiment, the front fork may include two front suspensions disposed respectively at a right side and a left side of the front wheel. The straddled vehicle may further include a flasher, at least a portion of which is disposed higher than upper ends of the two front suspensions in the front view of the straddled vehicle.

With this arrangement, the flasher is disposed at a high position so that at least a portion of the flasher is positioned higher than the upper ends of the front suspensions. Therefore, when the rider checks the lighting of the high beam lamp, the light of the flasher is unlikely to enter the rider's eyes. The rider can thus readily check the lighting of the high beam.

In the preferred embodiment, the front fork may include two front suspensions disposed respectively at a right side and a left side of the front wheel, an under bracket coupled to the two front suspensions, and a top bracket coupled to the two front suspensions above the under bracket. The high beam cover of the high beam lamp may be disposed further in front than a front end of the under bracket in a side view of the straddled vehicle.

If the high beam lamp is too close to the rider's riding position in the vehicle front-rear direction, the movement amount of the rider's line of sight when the rider looks at the high beam lamp will be large and it may thus be difficult for the rider to check the lighting of the high beam lamp. With this arrangement, the high beam lamp is disposed at a position in front and the rider can thus check the lighting of the high beam readily.

In the preferred embodiment, the straddled vehicle may further include a meter, disposed in front of the steering handle and displaying information on the straddled vehicle, and a meter cover, disposed in front of the meter and positioned above the lamp cover. The meter may either be a digital meter or an analog meter. The meter cover may be disposed further to the rear than a rear end of the high beam lamp in the plan view of the straddled vehicle.

With this arrangement, the meter and the meter cover are disposed in front of the steering handle. The meter cover is disposed further to the rear than the rear end of the high beam lamp in the plan view of the straddled vehicle and the line of sight of the rider attempting to look at the high beam lamp is thus unlikely to be blocked by the meter cover. Therefore, even when the meter and the meter cover are included, the lighting of the high beam can be checked readily. The meter cover may be disposed further to the rear than the extension portion in the plan view of the straddled vehicle.

In the preferred embodiment, a dimension of the extension portion in the vehicle front-rear direction may be greater than a dimension of the extension portion in a vehicle up-down direction.

The extension portion is positioned in front of the high beam lamp in the plan view of the straddled vehicle. If the extension portion is short in the vehicle front-rear direction, it may be difficult to check the lighting state of the high beam lamp. With this arrangement, the dimension of the extension portion in the vehicle front-rear direction is greater than the dimension of the extension portion in the vehicle up-down direction. In this way, the extension portion, that is long in the vehicle front-rear direction, is positioned in front of the high beam lamp in the plan view of the straddled vehicle, and it is thus unlikely for the checking of the lighting of the high beam lamp to be obstructed by the light of the low beam lamp. The lighting state of the high beam lamp can thus be checked readily.

In the preferred embodiment, the low beam lamp may be disposed at a position at which the low beam lamp is hidden by the lamp cover in the plan view of the straddled vehicle.

With this arrangement, the low beam lamp is hidden by the lamp cover and is not visible in the plan view of the straddled vehicle. Therefore, when the rider looks at the high beam lamp, it is unlikely for the light of the low beam lamp to enter the rider's eyes. The rider can thus readily check whether or not the high beam lamp is lit.

In the preferred embodiment, the low beam lamp may be disposed in front of extension portion in the plan view of the straddled vehicle.

With this arrangement, in the plan view of the straddled vehicle, the low beam lamp is disposed in front of the extension portion and the high beam lamp is disposed behind the extension portion. That is, the high beam lamp and the low beam lamp are partitioned from each other by the extension portion through which light is not transmitted. It is thus unlikely for the checking of the lighting of the high beam lamp to be obstructed by the light of the low beam lamp. The lighting state of the high beam lamp can thus be checked readily.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a schematic left side view of a straddled vehicle according to a preferred embodiment.
FIG. 2 is a schematic left side view of the straddled vehicle from which exterior covers, etc., have been removed.
FIG. 3 is a schematic plan view of the straddled vehicle from which the exterior covers, etc., have been removed.
FIG. 4 is a schematic view for describing the exterior covers.
FIG. 5 is a schematic perspective view of a front portion of the straddled vehicle including a headlamp.
FIG. 6 is a schematic front view of the front portion of the straddled vehicle including the headlamp.
FIG. 7 is a schematic plan view of the front portion of the straddled vehicle including the headlamp.
FIG. 8 is a schematic left side view of the front portion of the straddled vehicle including the headlamp.
FIG. 9 is a schematic left side view of the front portion of the straddled vehicle with a front suspension in the foreground omitted.
FIG. 10 is a schematic front view of the front portion of the straddled vehicle from which a lamp cover has been removed.
FIG. 11 is an exploded perspective view of the headlamp.
FIG. 12 is a sectional view of a section taken along line XII-XII in FIG. 10.
FIG. 13 is a sectional view of a section taken along line XIII-XIII in FIG. 10.
FIG. 14 is a schematic front view of the headlamp.
FIG. 15 is a schematic plan view of the headlamp.
FIG. 16 is a schematic plan view of a headlamp according to another preferred embodiment.

### DETAILED DESCRIPTION OF THE PREFERRED EMBODIMENTS

Front-rear, up-down, and left-right directions in the following description are defined on the basis of a viewpoint of a forward-facing rider who sits on a straddled vehicle 1 in a reference posture in which the straddled vehicle 1 travels straight ahead on a horizontal plane (in which a steering handle 7 is disposed at a straight-traveling position). The left-right direction corresponds to a vehicle width direction. A vehicle center WO corresponds to a vertical plane that passes through a center line of a head pipe 3 and that is perpendicular to a rotational center Cr of a rear wheel Wr. The straddled vehicle 1 in the reference posture will be hereinafter described unless specific notice is given.

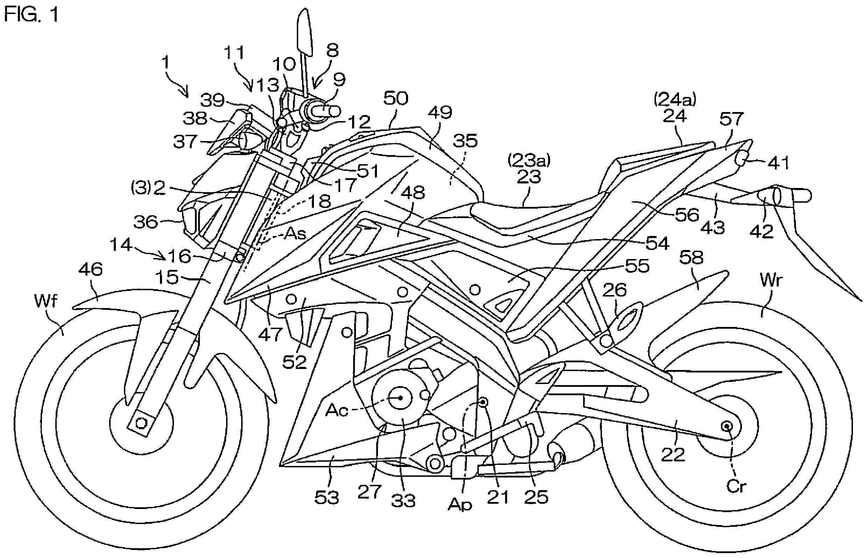

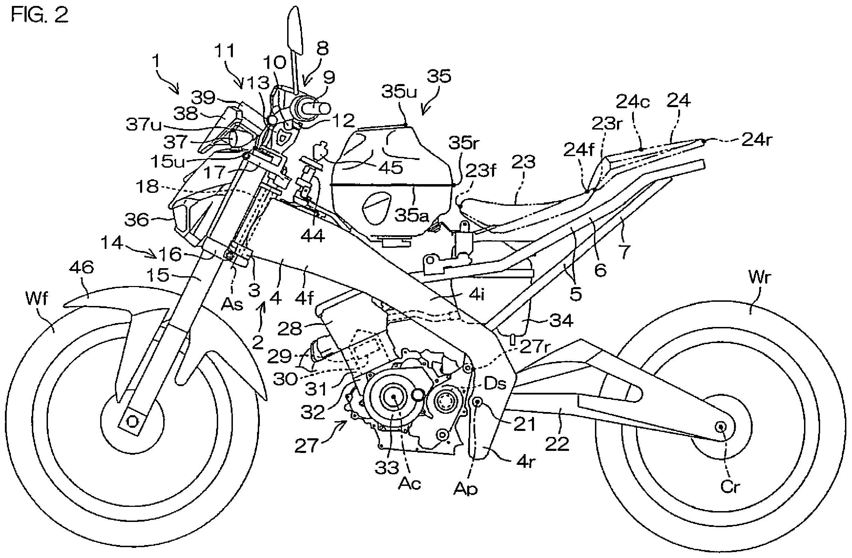

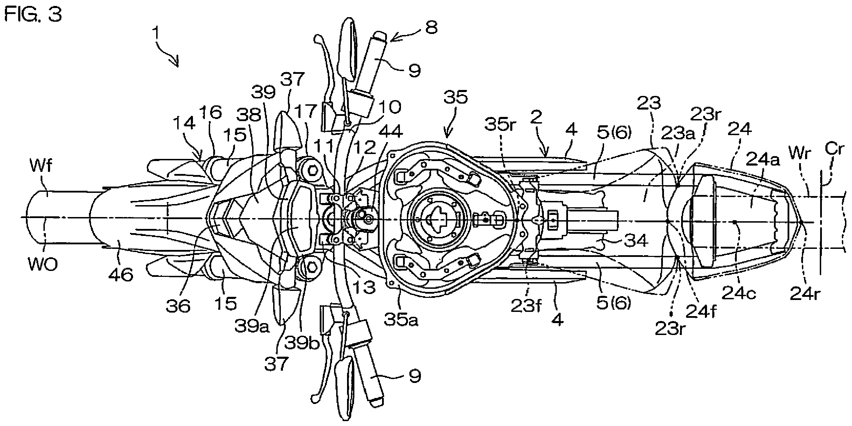

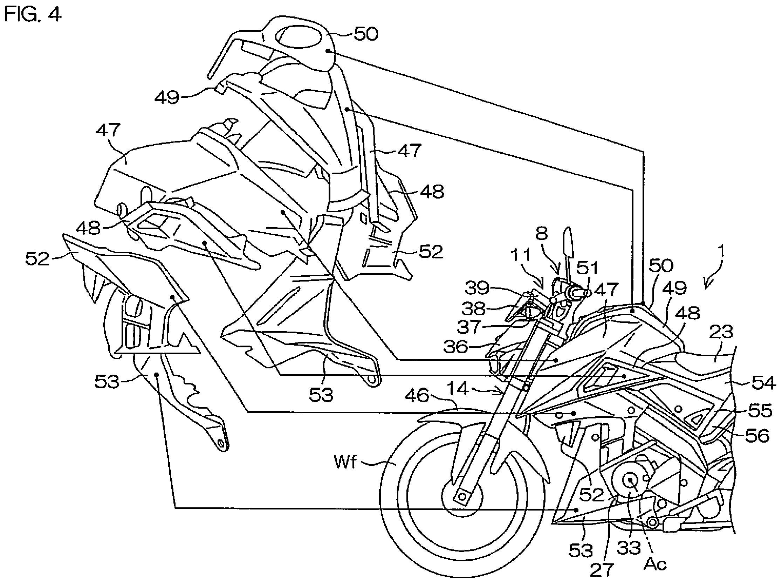

FIG. 1 is a schematic left side view of the straddled vehicle 1 according to a preferred embodiment of the present invention. FIG. 2 is a schematic left side view of the straddled vehicle 1 from which exterior covers, etc., have been removed. FIG. 3 is a schematic plan view of the straddled vehicle 1 from which the exterior covers, etc., have been removed. FIG. 4 is a schematic view for describing the exterior covers. A left upper portion of FIG. 4 shows an exploded perspective view of a tank cover and an engine cover.

The straddled vehicle 1 includes a vehicle body frame 2. FIG. 2 shows the straddled vehicle 1 from which the exterior covers have been removed. The vehicle body frame 2 includes a head pipe 3 extending rearward and upward, a pair of right and left main frames 4 extending rearward and downward from the head pipe 3, and a pair of right and left seat frames 5 extending rearward from the pair of main frames 4. As shown in FIG. 3, the pair of main frames 4 are disposed respectively at a right side and a left side of the vehicle center WO. The pair of main frames 4 face each other in a right-left direction. The same applies to the pair of seat frames 5.

As shown in FIG. 2, each main frame 4 includes a front end portion 4f extending rearward and downward from the head pipe 3 while spreading outward in the vehicle width direction, an intermediate portion 4i extending downward and rearward from the front end portion 4f, and a rear end portion 4r extending downward from the intermediate portion 4i. The seat frames 5 are connected to the intermediate portions 4i of the main frames 4. Each seat frame 5 includes an upper frame 6 extending rearward from a main frame 4 and a lower frame 7 extending rearward from the main frame 4 and disposed below the upper frame 6 in side view.

The straddled vehicle 1 includes a front fork 14 rotatably supporting a front wheel Wf and being supported by the head pipe 3 so as to be rotatable around a steering axis As, which corresponds to the center line of the head pipe 3. The straddled vehicle 1 further includes a steering handle 8 that is operated by the rider when steering the straddled vehicle 1 and a handle holder 11 coupling the steering handle 8 to the front fork 14.

As shown in FIG. 2, the front fork 14 includes a pair of front suspensions 15 respectively disposed at a right side and a left side of the front wheel Wf, an under bracket 16 mounted to the pair of front suspensions 15, and a top bracket 17 mounted, above the under bracket 16, to the pair of front suspensions 15. The front fork 14 further includes a steering shaft 18 supported by the top bracket 17 and the under bracket 16.

An upper end and a lower end of the steering shaft 18 are respectively supported by the top bracket 17 and the under bracket 16. The pair of mutually parallel front suspensions 15 project upward from the top bracket 17. The steering shaft 18 is disposed behind the front suspensions 15 in side view. The steering shaft 18 that extends rearward and upward is inserted inside the head pipe 3. The steering shaft 18 is rotatable with respect to the head pipe 3 around the steering axis As that extends rearward and upward. A steering force applied to the steering handle 8 by the rider is transmitted via the handle holder 11 to the front fork 14. The front fork 14 thereby pivots around the steering axis As together with the front wheel Wf, etc., and the straddled vehicle 1 is steered.

As shown in FIG. 2, the steering handle 8 is disposed above the front fork 14. The steering handle 8 includes a pair of handle grips 9 to be gripped by the rider, and a handle bar 10 supporting the pair of handle grips 9. The pair of handle grips 9 are mounted respectively to a right end portion and a left end portion of the handle bar 10. A central portion of the handle bar 10 is mounted to the handle holder 11. The handle grip 9 at the right side is a throttle grip that is rotatable with respect to the handle bar 10. An output of an engine 27 is adjusted according to a rotation amount of the throttle grip.

As shown in FIG. 2, the handle holder 11 includes upper holders 12 disposed above the steering handle 8 and lower holders 13 disposed between the top bracket 17 and the steering handle 8. The upper holders 12 are detachably fixed by bolts to the lower holders 13. The lower holders 13 are fixed to the top bracket 17. The handle holder 11 clamps the handle bar 10 by the upper holders 12 and the lower holders 13 to hold the steering handle 8. The lower holders 13 are not restricted to being members separate from the top bracket 17 and may be a single member integral to the top bracket 17.

The straddled vehicle 1 includes a rear arm 22 rotatably supporting a rear wheel Wr and being supported by the vehicle body frame 2 so that the rear arm 22 rotates upward and downward around a pivot axis Ap extending in the right-left direction. A front end portion of the rear arm 22 is disposed between the pair of main frames 4. The front end portion of the rear arm 22 is coupled to the main frames 4 via a pivot shaft 21 extending in the right-left direction. Respective end portions of the pivot shaft 21 are supported by the pair of main frames 4. The rear wheel Wr is rotatably supported by a rear end portion of the rear arm 22. The rear arm 22 and the rear wheel Wr are rotatable in the up-down direction with respect to the main frames 4 around a central line of the pivot shaft 21 corresponding to the pivot axis Ap.

As shown in FIG. 2, the straddled vehicle 1 includes a main seat 23 on which the rider sits and a tandem seat 24 on which a passenger sits. The straddled vehicle 1 further includes main steps 25 on which the feet of the rider are placed and tandem steps 26 on which the feet of the passenger are placed.

The main seat 23 and the tandem seat 24 are separate members. The main seat 23 is disposed behind a fuel tank 35 and the tandem seat 24 is disposed behind and above the main seat 23. The main seat 23 and the tandem seat 24 are supported from below thereof by the seat frames 5.

A seat surface 24a of the tandem seat 24 that contacts the buttocks of the passenger is disposed further to the rear and higher than a seat surface 23a of the main seat 23 that contacts the buttocks of the rider. The main steps 25 are disposed below the main seat 23 in side view. The tandem steps 26 are disposed further to the rear than the main steps 25. The main steps 25 and the tandem steps 26 are supported by the vehicle body frame 2.

A rear end 24r of the tandem seat 24 is disposed above the rear wheel Wr in side view. The rear end 24r of the tandem seat 24 is disposed further to the front than a rotation center Cr of the rear wheel Wr in side view. Similarly, a center 24c of the tandem seat 24 in the front-rear direction is disposed further to the front than the rotation center Cr of the rear wheel Wr. A front end 24f of the tandem seat 24 is disposed further to the front than a front end of the rear wheel Wr in side view.

The front end 24f of the tandem seat 24 is disposed above the main seat 23 in side view. To move a riding position of the passenger to the front, the front end 24f of the tandem seat 24 is disposed further to the front than a rear end 23r of the main seat 23. A rear end portion of the main seat 23 and a front end portion of the tandem seat 24 are overlapped with each other in the up-down direction.

The front end 23f of the main seat 23 is disposed further to the front than the pivot axis Ap in side view. The front end 23f of the main seat 23 is disposed further to the front than a front edge of the rear end portion 4r of the main frame 4 in side view. The front end 23f of the main seat 23 is disposed further to the front than a rear end 27r of the engine 27 in side view. The front edge of the rear end portion 4r of the main frame 4 is disposed further to the front than the pivot axis Ap. The rear end 27r of the engine 27 is disposed at a position further to the front than the pivot axis Ap and higher than the pivot axis Ap.

As shown in FIG. 2, the straddled vehicle 1 includes the engine 27 that generates a motive power to cause the straddled vehicle 1 to travel, an air cleaner 34 that removes foreign matters from air to be supplied to the engine 27, and a fuel tank 35 that stores fuel to be supplied to the engine 27. The engine 27 is supported by the vehicle body frame 2. Similarly, the fuel tank 35 and the air cleaner 34 are supported by the vehicle body frame 2.

The engine 27 is disposed below the main frame 4 in side view. The engine 27 is disposed between the front wheel Wf and the rear wheel Wr in the front-rear direction. The engine 27 includes a cylinder body 31 defining a cylinder 30 that houses a piston 29, and a cylinder head 28 defining, together with the piston 29, a combustion chamber in which fuel is combusted. The engine 27 further includes a crankcase 32 housing a crankshaft that is rotatable around a crank axis Ac extending horizontally in the right-left direction, and a crank cover 33 disposed at a side of the crankcase 32.

The cylinder body 31 may be a single member integral to the crankcase 32 or may be a separate member from the crankcase 32. The crankcase 32 houses a driveshaft Ds extending in the vehicle width direction and a sprocket that rotates together with the driveshaft Ds. The driveshaft Ds is coupled to the rear wheel Wr via a chain wound around the sprocket. Rotation of the crankshaft is transmitted via the driveshaft Ds to the rear wheel Wr.

The cylinder 30 extends upward from the crankcase 32. The cylinder 30 and the crank axis Ac are disposed below the intermediate portion 4i of the main frame 4 in side view. A rear end portion 4r of the main frame 4 is positioned behind the crank axis Ac in side view. A lower end of the rear end portion 4r corresponding to a lower end of the main frame 4 is positioned lower than the crank axis Ac. The cylinder 30 and the crank axis Ac are positioned further to the front than the pivot axis Ap.

The fuel tank 35 is disposed above the main frame 4 in side view. All portions of the fuel tank 35 are separated upward from the main frame 4 in side view. The fuel tank 35 is disposed above the engine 27 in side view. The cylinder 30 and the crank axis Ac are disposed below the fuel tank 35 in side view. Front ends of the upper frames 6 of the seat frames 5 are disposed below the fuel tank 35 in side view. Front ends of the lower frames 7 of the seat frames 5 are disposed further to the rear than the fuel tank 35 in side view.

An upper end 35u of the fuel tank 35 is disposed higher than the rear end 24r of the tandem seat 24. The upper end 35u of the fuel tank 35 is disposed higher than upper ends 37u of flashers 37. Upper ends 15u of the front suspensions 15 are disposed lower than the upper ends 37u of the flashers 37. The handle grips 9 are disposed higher than the upper end 35u of the fuel tank 35.

A rear end 35r of the fuel tank 35 is disposed further to the front than the front end 23f of the main seat 23. The rear end 35r of the fuel tank 35 signifies a rear end of the fuel tank 35 not including a joined portion 35a. The rear end 35r of the fuel tank 35 is disposed higher than any portion of the main seat 23. The pivot axis Ap is disposed further to the rear than the front end 23f of the main seat 23.

The air cleaner 34 houses an element that removes foreign matters from air. The air cleaner 34 is disposed behind and below the fuel tank 35 in side view. The air cleaner 34 is disposed behind and above the engine 27 in side view. The air cleaner 34 is connected to the engine 27 via an air intake pipe extending forward from the air cleaner 34. The air cleaned by the air cleaner 34 is supplied via the air intake pipe to the engine 27.

The air cleaner 34 is disposed behind the cylinder 30. A front end of the air cleaner 34 is disposed further to the rear than a rear end of the cylinder 30. An upper end of the air cleaner 34 is disposed higher than an upper end of the cylinder 30. A lower end of the air cleaner 34 is disposed lower than the upper end of the cylinder 30. At least a portion of the air cleaner 34 is disposed at a height equivalent to that of the cylinder 30.

The air cleaner 34 is disposed further to the rear than the crank axis Ac. The air cleaner 34 is disposed above the pivot axis Ap. The air cleaner 34 is disposed below the main seat 23. The rear end 23r of the main seat 23 is disposed further to the rear than the air cleaner 34. The pair of main frames 4 are respectively disposed at a right side and a left side of the air cleaner 34. The same applies to the pair of seat frames 5. In side view, the air cleaner 34 projects upward from the upper frames 6 of the seat frames 5 and projects downward from the lower frames 7 of the seat frames 5.

As shown in FIG. 1, the straddled vehicle 1 includes a headlamp 36 that emits light forward and two flashers 37 that flash in accordance with an operation of the rider. The straddled vehicle 1 further includes a tail lamp 41 that emits light rearward and two flashers 42 that flash in accordance with an operation of the rider.

The headlamp 36 and the flashers 37 are disposed above the front wheel Wf in side view. The flashers 37 are disposed above the headlamp 36 in side view. The headlamp 36 is disposed in front of the head pipe 3. As shown in FIG. 3, the headlamp 36 overlaps with the vehicle center WO in the vehicle width direction. The two flashers 37 are respectively disposed at the right side and the left side of the vehicle center WO. The headlamp 36 and the flashers 37 are supported by the front fork 14. The headlamp 36 and the flashers 37 pivot around the steering axis As together with the front fork 14.

As shown in FIG. 1, the tail lamp 41 and the flashers 42 are disposed above the rear wheel Wr in side view. The flashers 42 are disposed further to the rear than the tail lamp 41. The tail lamp 41 overlaps with the vehicle center WO. The two flashers 42 are respectively disposed at the right side and the left side of the vehicle center WO. The tail lamp 41 is supported by the seat frames 5. The flashers 42 are supported by the seat frames 5 via a rear stay 43. The tail lamp 41 and the flashers 42 are disposed further to the rear than the rear end 24r of the tandem seat 24.

As shown in FIG. 3, the straddled vehicle 1 includes a meter 39 that displays various information including a traveling speed of the straddled vehicle 1, and a meter cover 38 disposed in front of the meter 39. The meter 39 is, for example, a digital meter. The meter 39 includes a display 39a (display device) that displays the various information and a meter housing 39b that houses the display 39a so that a portion of the display 39a is exposed through an opening provided with the meter housing 39b.

As shown in FIG. 2, the meter 39 and the meter cover 38 are disposed in front of the steering handle 8. The meter 39 and the meter cover 38 are disposed above the headlamp 36. The meter 39 is disposed between the two flashers 37. The meter 39 and the meter cover 38 are supported by the front fork 14. The meter 39 and the meter cover 38 pivot around the steering axis As together with the front fork 14.

The straddled vehicle 1 includes a main switch 44 that is operated by the rider when the engine 27 and electrical equipment are to be started. FIG. 2 shows an example where the main switch 44 is a key cylinder. When a main key 45, inserted in the main switch 44, is disposed at a start position, electric power is supplied to a starter motor that starts the engine 27 and the engine 27 is started.

The main switch 44 is disposed further to the rear than the head pipe 3. The main switch 44 is positioned in front of the fuel tank 35. The main switch 44 is disposed lower than the upper end 35u of the fuel tank 35. The main switch 44 is disposed above the main frames 4 in side view. The main switch 44 is supported by the main frames 4. As shown in FIG. 3, the main switch 44 is overlapped with the vehicle center WO. In plan view, the main switch 44 is disposed between the handle bar 10 and the fuel tank 35.

As shown in FIG. 1, the straddled vehicle 1 includes exterior covers that define an outer surface of the straddled vehicle 1. The exterior covers include a front fender 46 disposed above the front wheel Wf, tank covers 47 to 50 disposed above and at sides of the fuel tank 35, and a switch cover 51 covering the main switch 44. The exterior covers further include engine covers 52 and 53 disposed at sides of the engine 27, rear covers 54 to 57 disposed at sides of the seat frames 5, and a rear fender 58 disposed above the rear wheel Wr.

As shown in FIG. 4, the tank covers include a center cover 49 disposed above the fuel tank 35 and a cap cover 50 defining an opening at which a tank cap is exposed. The tank covers further include two side covers 47 disposed at the sides of the fuel tank 35 and two under covers 48 disposed below the two side covers 47.

As shown in FIG. 4, the engine covers include two upper covers 52 disposed at sides of the cylinder 30 and the main frames 4 and a lower cover 53 disposed below the two upper covers 52. The upper covers 52 are disposed below the side covers 47 and the under covers 48 of the tank covers. The lower cover 53 includes a portion positioned in front of the crank cover 33 provided at the engine 27 and a portion positioned below the crank cover 33.

As shown in FIG. 1, the rear covers include an upper cover 54 disposed below the main seat 23 in side view and a lower cover 55 disposed below the upper cover 54. The rear covers further include a side cover 56 disposed behind the upper cover 54 and the lower cover 55 and a tail cover 57 disposed behind the side cover 56. The tandem seat 24 is disposed above the side cover 56 in side view. A rear end of the tail cover 57 is positioned behind the rear end 24r of the tandem seat 24.

The headlamp 36 and its surrounding structure shall now be described in detail.

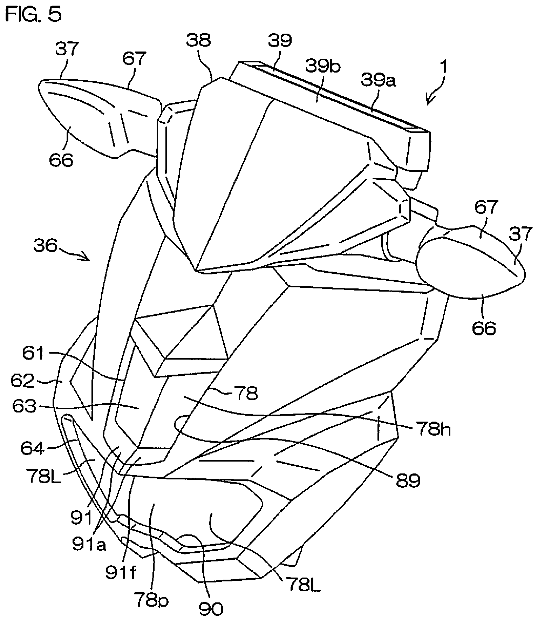

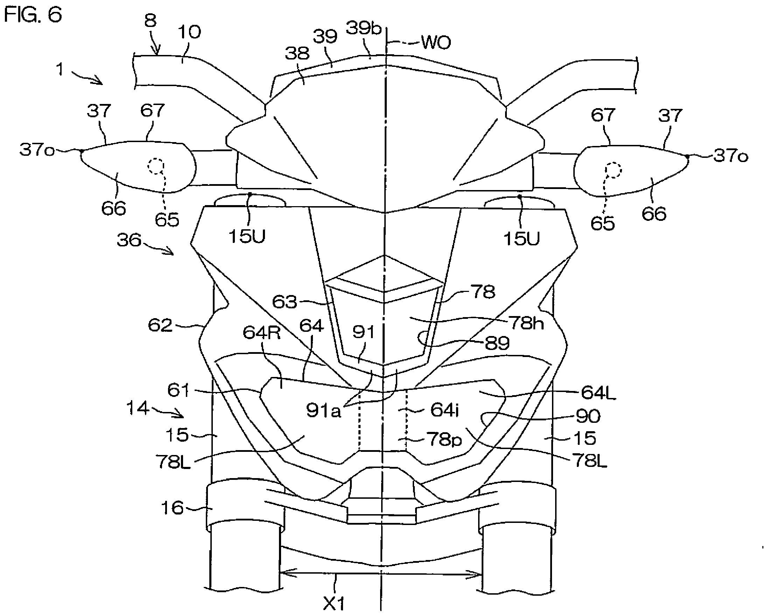

FIG. 5 is a schematic perspective view of a front portion of the straddled vehicle 1 including the headlamp 36. FIG. 6, FIG. 7, and FIG. 8 are a schematic front view, plan view, and left side view of the front portion of the straddled vehicle 1 including the headlamp 36.

As shown in FIG. 5, the headlamp 36 includes a lamp unit 61 that emits light and a lamp cover 62 disposed in front of the lamp unit 61. The lamp unit 61 includes a high beam lamp 63 and low beam lamp 64 that are exposed at two opening portions 89 and 90 of the lamp cover 62.

As shown in FIG. 6, the high beam lamp 63 is disposed above the low beam lamp 64. The low beam lamp 64 includes a right low beam lamp 64R disposed at the right side of the vehicle center WO, a left low beam lamp 64L disposed at the left side of the vehicle center WO, and a position lamp 64i disposed between the right low beam lamp 64R and the left low beam lamp 64L.

The high beam lamp 63 and the low beam lamp 64 are disposed higher than the under bracket 16 in front view. The flashers 37, the meter 39, and the meter cover 38 are disposed higher than the high beam lamp 63 and the low beam lamp 64. The two flashers 37 are respectively disposed at a right side and a left side of the meter 39. An interval X1 in the right-left direction between inner ends of the two front suspensions 15 is greater than a dimension of the high beam lamp 63 in the right-left direction and smaller than a dimension of the low beam lamp 64 in the right-left direction.

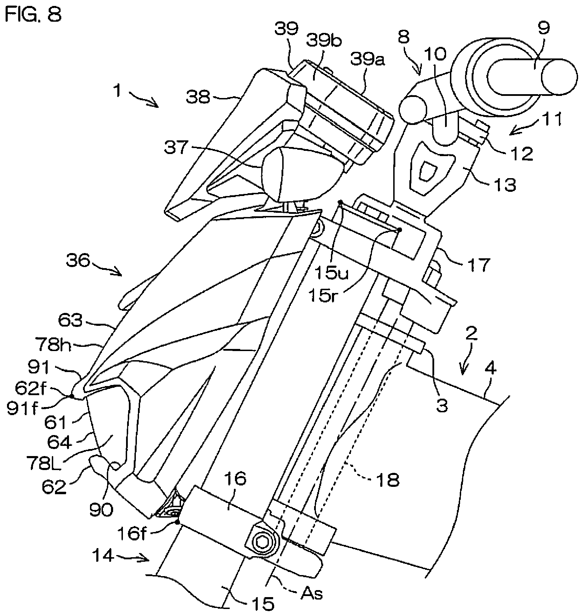

As shown in FIG. 8, the headlamp 36 is disposed in front of the front suspension 15. The top bracket 17 and the under bracket 16 are disposed behind the headlamp 36. The flashers 37, the meter 39, and the meter cover 38 are disposed above the headlamp 36. The flashers 37 and the meter 39 are disposed higher than the rear ends 15r of the front suspensions 15 that extend upward and reward. The flashers 37 and the meter 39 are disposed in front of the handle holder 11 in side view.

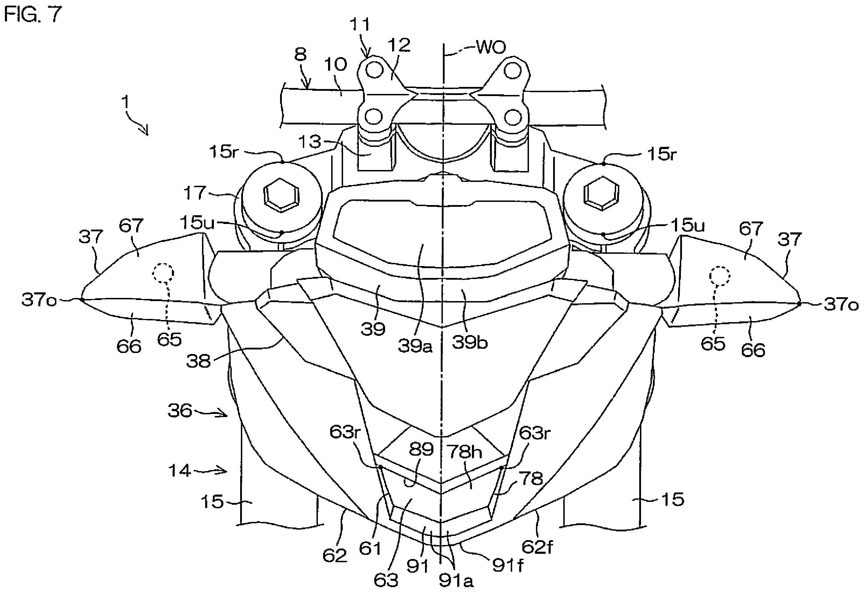

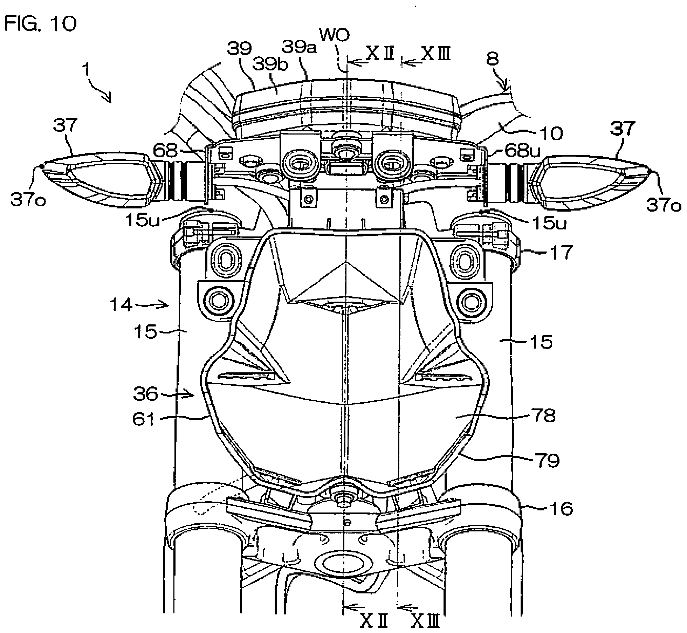

As shown in FIG. 7, each flasher 37 includes a light source 65 that flashes in accordance with an operation of the rider, a clear cover 66 disposed in front of the light source 65, and a housing 67 housing the light source 65. The clear cover 66 is disposed in front of the housing 67. The clear cover 66 is mounted to the housing 67. The clear cover 66 and the housing 67 define a housing space housing the light source 65 between the two. The housing 67 is connected to the front fork 14 via a front stay 68 (see FIG. 10).

As shown in FIG. 7, outer ends 37o in the vehicle width direction of the flashers 37 are disposed further outside than the headlamp 36 and the front suspensions 15. The flashers 37 are disposed further to the rear than the high beam lamp 63. As shown in FIG. 8, the flashers 37 are disposed further to the front than the rear ends 15r of the front suspensions 15. Lower ends of the flashers 37 are disposed at a height equal to that of the upper ends 15u of the front suspensions 15. The flashers 37 are disposed further to the rear than a front end of the meter cover 38.

As shown in FIG. 7, the meter 39 is disposed between the meter cover 38 and the handle holder 11 in the front-rear direction. The display 39a of the meter 39 is disposed further to the rear than the outer ends 37o of the flashers 37. The two front suspensions 15 are respectively disposed at the right side and the left side of the meter 39 in plan view. The meter 39 and the meter cover 38 are disposed behind the high beam lamp 63 in plan view.

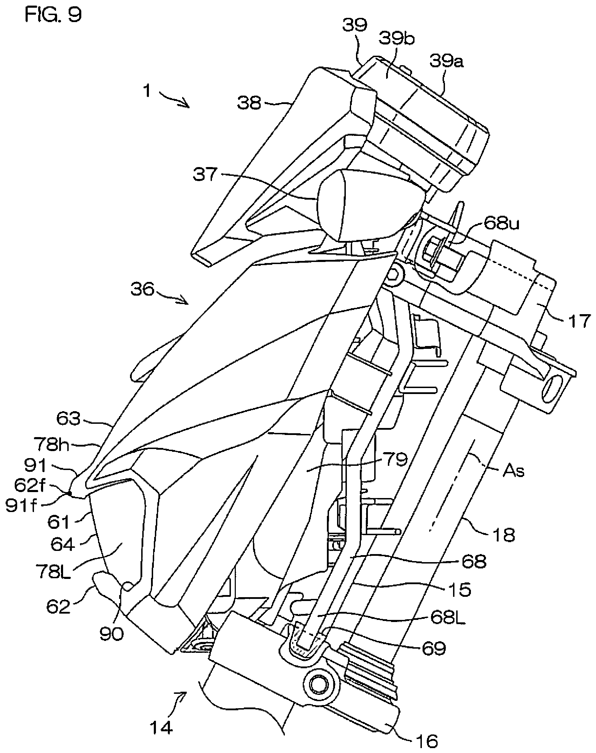

FIG. 9 shows the front fork 14 with the front suspension 15 in the foreground omitted. As shown in FIG. 9, a portion of the headlamp 36 is disposed between the two front suspensions 15. The front stay 68 that couples the headlamp 36, etc., to the front fork 14 is mounted to the front fork 14. A lower end portion 68L of the front stay 68 is supported by the under bracket 16 via a cushioning 69 prepared from an elastic material, such as rubber or resin, etc. The front stay 68 extends upward from the under bracket 16 to a position in front of the top bracket 17. The front stay 68 is mounted by bolts to the top bracket 17.

FIG. 10 is a schematic front view of the front portion of the straddled vehicle 1 from which the lamp cover 62 of the headlamp 36 has been removed. As shown in FIG. 10, the upper end portion 68u of the front stay 68 is disposed higher than the top bracket 17. The flashers 37, the meter 39, and the meter cover 38 are mounted to the upper end portion 68u of the front stay 68. When the rider steers the steering handle 8, the headlamp 36, the flashers 37, the meter 39, and the meter cover 38 pivot, together with the front fork 14, around the steering axis As.

The structure of the headlamp 36 shall now be described in detail.

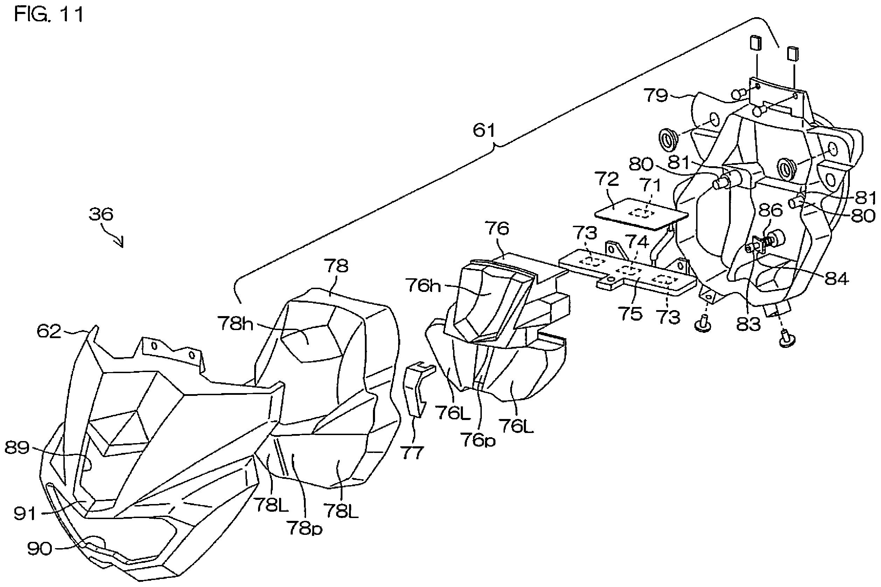

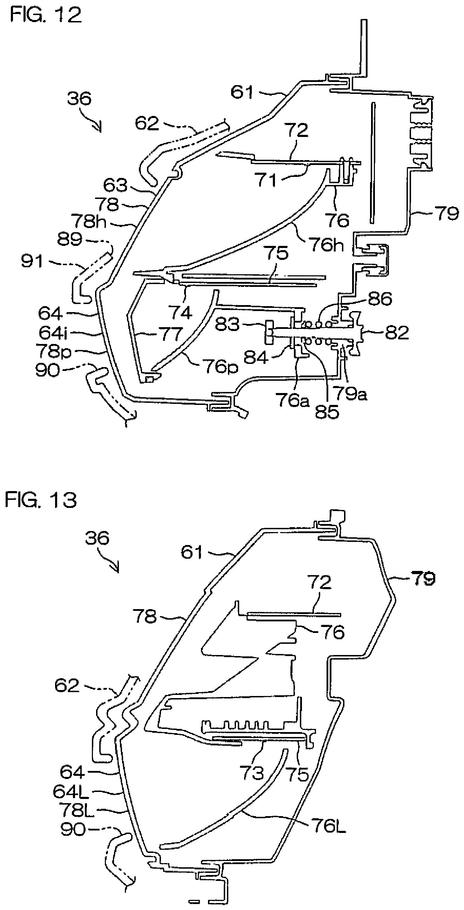

FIG. 11 is an exploded perspective view of the headlamp 36. FIG. 12 is a sectional view of a section taken along line XII-XII in FIG. 10. FIG. 13 is a sectional view of a section taken along line XIII-XIII in FIG. 10.

As mentioned above, the headlamp 36 includes the high beam lamp 63 and the low beam lamp 64. The low beam lamp 64 includes the right low beam lamp 64R, the left low beam lamp 64L, and the position lamp 64i. The high beam lamp 63, the right low beam lamp 64R, the left low beam lamp 64L, and the position lamp 64i are all LED lamps.

As shown in FIG. 11, an LED light source 71 of the high beam lamp 63 is held on an upper substrate 72. An LED light source 73 of the right low beam lamp 64R, an LED light source 73 of the left low beam lamp 64L, and an LED light source 74 of the position lamp 64i are held on a lower substrate 75. The upper substrate 72 and the lower substrate 75 are held on a reflector 76 of the lamp unit 61.

The reflector 76 includes a high reflector 76h reflecting forward light emitted by the LED light source 71 of the high beam lamp 63 and two low reflectors 76L reflecting forward light emitted by the LED light sources 73 of the right low beam lamp 64R and the left low beam lamp 64L. The reflector 76 further includes a position reflector 76p reflecting forward light emitted by the LED light source 74 of the position lamp 64i. The position reflector 76p is positioned between the two low reflectors 76L. The high reflector 76h is positioned above the low reflectors 76L and the position reflector 76p.

The lamp unit 61 includes an outer cover 78 disposed in front of the reflector 76 and an inner cover disposed between the outer cover 78 and the reflector 76. The outer cover 78 and the inner cover 77 are both clear covers prepared from transparent material. The outer cover 78 includes a high beam cover 78h disposed in front of the high reflector 76h, two low beam covers 78L disposed in front of the two low reflectors 76L, and a position cover 78p disposed in front of the position reflector 76p. As shown in FIG. 12, the inner cover 77 is positioned between the position reflector 76p and the position cover 78p.

As shown in FIG. 11, the inner cover 77 is mounted on the reflector 76. The reflector 76 is mounted on a lamp base 79 of the lamp unit 61. Similarly, the outer cover 78 and the lamp cover 62 are mounted on the lamp base 79. The lamp base 79 is mounted on the front fork 14 via the front stay 68 (see FIG. 9). The lamp base 79 is disposed behind the reflector 76. As shown in FIG. 12, the reflector 76 is housed in a housing space defined between the outer cover 78 and the lamp base 79. Similarly, the LED light source 71, etc., of the high beam lamp 63 are housed in the housing space.

As shown in FIG. 12, the upper substrate 72 is held on the reflector 76. The LED light source 71 of the high beam lamp 63 is held on a lower surface of the upper substrate 72. The LED light source 71 of the high beam lamp 63 is disposed above the high reflector 76h. The high reflector 76h has an arcuate cross section that is open forward and upward. Light irradiated downward from the LED light source 71 of the high beam lamp 63 is reflected forward by the high reflector 76h and passes through the high beam cover 78h and the upper opening portion 89 in the front-rear direction.

As shown in FIG. 13, the lower substrate 75 is held on the reflector 76. The lower substrate 75 is disposed below the upper substrate 72. The LED light sources 73 of the low beam lamp 64 are held on a lower surface of the lower substrate 75. The LED light sources 73 of the low beam lamp 64 are disposed above the low reflectors 76L. Each low reflector 76L has an arcuate cross section that is open forward and upward. Light irradiated downward from the LED light sources 73 of the low beam lamp 64 is reflected forward by the low reflectors 76L and passes through the low beam covers 78L and the lower opening portion 90 in the front-rear direction.

As with the LED light sources 73 of the low beam lamp 64, the LED light source 74 of the position lamp 64i is held on the lower surface of the lower substrate 75 as shown in FIG. 12. The LED light source 74 of the position lamp 64i is disposed above the position reflector 76p. The position reflector 76p is disposed in front of an aiming mechanism to be described below. The position reflector 76p has an arcuate cross section that is open forward and upward. Light irradiated downward from the LED light source 74 of the position lamp 64i is reflected forward by the position reflector 76p and passes through the inner cover 77, the low beam covers 78L and the lower opening portion 90 in the front-rear direction.

As shown in FIG. 11, the lamp base 79 includes two mounting shafts 81 that support the reflector 76 via grommets 80 prepared from an elastic material, such as rubber or resin, etc. The two mounting shafts 81 are parallel to each other and face each other in the right-left direction. The mounting shafts 81 extend forward from a front surface of the lamp base 79. The mounting shafts 81 are inserted in insertion holes provided in the reflector 76. The mounting shafts 81 support an upper portion of the reflector 76 via the grommets 80. When a lower portion of the reflector 76 is pushed in the front-rear direction, the reflector 76 pivots in the front-rear direction with respect to the lamp base 79 due to elastic deformation of the grommets 80.

The lamp unit 61 includes an aiming mechanism that pivots the reflector 76 in the front-rear direction with respect to the two mounting shaft 81 of the lamp base 79 to change the direction of light in the up-down direction. As shown in FIG. 12, the aiming mechanism is a mechanism that holds a movable portion 76a of the reflector 76 at a predetermined position with respect to a fixed portion 79a of the lamp base 79 and moves the movable portion 76a of the reflector 76 with respect to a fixed portion 79a of the lamp base 79 in accordance with an operation by a user.

The aiming mechanism includes an adjusting screw 82, inserted from behind into the fixed portion 79a of the lamp base 79 and the movable portion 76a of the reflector 76, a stopper 83 mounted to a tip of the adjusting screw 82, and an adjusting nut 84 mounted to the adjusting screw 82 between the stopper 83 and the movable portion 76a. The aiming mechanism further includes an adjusting spring 86, surrounding the adjusting screw 82 between the fixed portion 79a and the movable portion 76a, and a ring 85, pressed against the movable portion 76a by the adjusting spring 86.

The movable portion 76a of the reflector 76 is pressed against the adjusting nut 84 by a restoring force of the adjusting spring 86. When an operation portion of the adjusting screw 82 disposed behind the lamp base 79 is operated by the user, the thread portion of the adjusting screw 82 rotates with respect to the adjusting nut 84 and the adjusting nut 84 moves in an axial direction of the adjusting screw 82. Accordingly, the movable portion 76a of the reflector 76 moves with respect to the fixed portion 79a of the lamp base 79 and the lower portion of the reflector 76 rotates with respect to the upper portion of the reflector 76. The direction of light irradiated forward from the headlamp 36 is thereby adjusted in the up-down direction.

The structure of the lamp cover 62 shall now be described in detail.

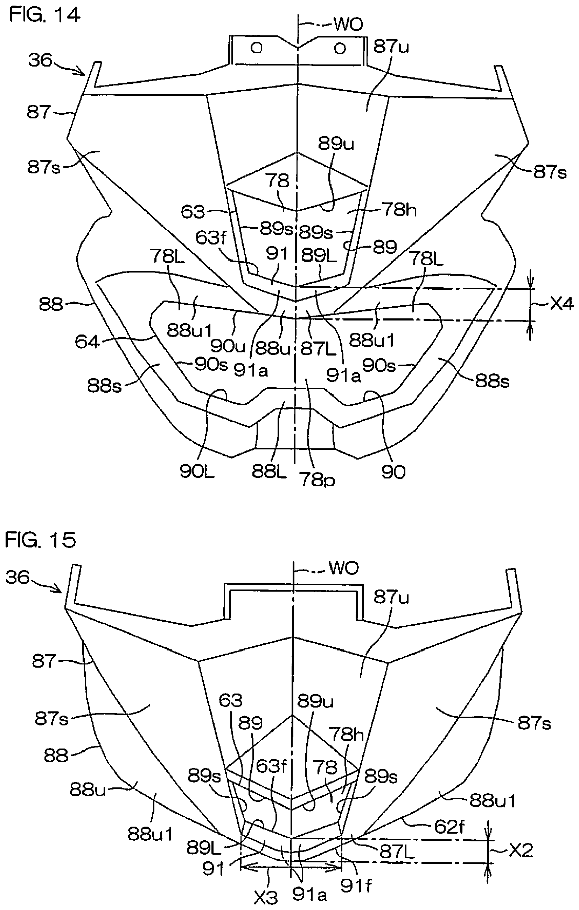

FIG. 14 is a schematic front view of the headlamp 36. FIG. 15 is a schematic plan view of the headlamp 36.

As shown in FIG. 14, the lamp cover 62 includes an upper lamp cover 87 in which the high beam lamp 63 is disposed and a lower lamp cover 88 in which the low beam lamp 64 is disposed. The upper lamp cover 87 includes the upper opening portion 89 that defines an upper space at which the high beam lamp 63 is exposed. The lower lamp cover 88 includes the lower opening portion 90 that defines a lower space at which the low beam lamp 64 is exposed. The lamp cover 62 may be a single, integral member or may be a plurality of members that are coupled to each other.

The upper lamp cover 87 includes an upper portion 87u disposed above the high beam lamp 63 in front view, a lower portion 87L disposed below the high beam lamp 63 in front view, and two side portions 87s respectively disposed at the right side and the left side of the high beam lamp 63 in front view. The upper opening portion 89 is defined by the upper portion 87u, the lower portion 87L, and the side portions 87s.

The lower lamp cover 88 includes an upper portion 88u disposed above the low beam lamp 64 in front view, a lower portion 88L disposed below the low beam lamp 64 in front view, and two side portions 88s respectively disposed at the right side and the left side of the low beam lamp 64 in front view. The lower opening portion 90 is defined by the upper portion 88u, the lower portion 88L, and the side portions 88s.

The lower portion 87L of the upper lamp cover 87 is disposed between the high beam lamp 63 and the low beam lamp 64 in front view. The lower portion 87L of the upper lamp cover 87 is shared by the upper lamp cover 87 and the lower lamp cover 88. That is, the upper portion 88u of the lower lamp cover 88 includes an intermediate portion (portion corresponding to the lower portion 87L) positioned between the high beam lamp 63 and the low beam lamp 64 in front view and two side end portions 88u1 respectively disposed at a right side and a left side of the intermediate portion in front view.

The upper opening portion 89 and the lower opening portion 90 overlap with the vehicle center WO. A center of the high beam lamp 63 in the right-left direction and a center of the low beam lamp 64 in the right-left direction are disposed at the vehicle center WO. A dimension of the upper opening portion 89 in the up-down direction is greater than a dimension of the lower opening portion 90 in the up-down direction. A dimension of the upper opening portion 89 in the right-left direction is smaller than a dimension of the lower opening portion 90 in the right-left direction.

The upper opening portion 89 at which the high beam lamp 63 is exposed includes an upper edge 89u defining an upper edge of the upper space, two side edges 89s defining two side edges of the upper space, and a lower edge 89L defining a lower edge of the upper space. The lower opening portion 90 at which the low beam lamp 64 is exposed includes an upper edge 90u defining an upper edge of the lower space, two side edges 90s defining two side edges of the lower space, and a lower edge 90L defining a lower edge of the lower space.

The upper edge 89u of the upper opening portion 89 is V-shaped in front view. The upper edge 89u of the upper opening portion 89 includes two inclined portions extending upward and outward in mutually opposite directions from the vehicle center WO. The lower edge 89L of the upper opening portion 89 is V-shaped in front view. The lower edge 89L of the upper opening portion 89 includes two inclined portions extending upward and outward in mutually opposite directions from the vehicle center WO. An inclination angle of the inclined portions of the lower edge 89L of the upper opening portion 89 with respect to a horizontal plane is smaller than an inclination angle of the inclined portions of the upper edge 89u of the upper opening portion 89 with respect to the horizontal plane. The side edges 89s of the upper opening portion 89 extends upward and outward from side ends of the lower edge 89L to side ends of the upper edge 89u in front view.

The upper edge 90u of the lower opening portion 90 includes two inner inclined portions extending upward and outward in mutually opposite directions from the vehicle center WO in front view and two outer inclined portions extending downward and outward in mutually opposite directions from the two inner inclined portions in front view. The lower edge 90L of the lower opening portion 90 includes an intermediate portion overlapping with the vehicle center WO in front view, two inner inclined portions extending downward and outward in mutually opposite directions from the intermediate portion in front view, and two outer inclined portions extending upward and outward in mutually opposite directions from the two inner inclined portions in front view. The side edges 90s of the lower opening portion 90 extend upward and outward from side ends of the lower edge 90L to side ends of the upper edge 90u in front view.

As shown in FIG. 15, the lamp cover 62 includes an extension portion 91 disposed in front of the high beam lamp 63 in plan view. The extension portion 91 corresponds to the lower portion 87L of the upper lamp cover 87. The extension portion 91 has a V-shape that opens rearward in plan view. The extension portion 91 includes two inclined surfaces 91a positioned in front of the high beam lamp 63 in plan view. The two inclined surfaces 91a extend downward and forward from the high beam lamp 63 (see FIG. 5). The two inclined surfaces 91a are connected to each other at a center of the extension portion 91 in the right-left direction. The two inclined surface 91a extend outward and upward in mutually opposite directions from the vehicle center WO.

As can be understood from FIG. 14 and FIG. 15, a lower edge of the high beam lamp 63 corresponds to a front edge 63f of the high beam lamp 63. A dimension in the front-rear direction from the front edge 63f of the high beam lamp 63 to a front edge 91f of the extension portion 91 corresponds to a dimension X2 of the extension portion 91 in the front-rear direction. The dimension X2 of the extension portion 91 in the front-rear direction is equal or approximately equal at any position in the right-left direction. The dimension X2 of the extension portion 91 in the front-rear direction is smaller than a dimension X3 of the extension portion 91 in the right-left direction. The dimension X2 of the extension portion 91 in the front-rear direction is greater than a dimension X4 (see FIG. 14) of the extension portion 91 in the up-down direction.

As shown in FIG. 15, the front edge 91f of the extension portion 91 is included in a front edge 62f of the lamp cover 62 in plan view. The high beam lamp 63 is disposed higher than the front edge 62f of the lamp cover 62 and the low beam lamp 64 is disposed lower than the front edge 62f of the lamp cover 62. Further, the high beam lamp 63 and the low beam lamp 64 are both disposed further to the rear than the front edge 62f of the lamp cover 62. When the headlamp 36 is viewed from thereabove, the low beam lamp 64 is hidden by the lamp cover 62 and is not visible.

All portions of the lamp cover 62 are prepared from an opaque material that does not transmit light. An example of such a material is a colored synthetic resin. The light of the high beam lamp 63 and the low beam lamp 64 is thus not transmitted through the extension portion 91. When the rider looks from above at the headlamp 36 with the high beam lamp 63 being lit, the light of the high beam lamp 63 is reflected by an outer surface of the extension portion 91 so that not only the high beam cover 78h but the outer surface of the extension portion 91 also appears to shine. On the other hand, when the headlamp 36 is viewed from thereabove, the low beam lamp 64 is hidden and the light of the low beam lamp 64 is thus unlikely to reach the rider's eyes.

As described above, with the present preferred embodiment, when the steering handle 8 is operated, the headlamp 36 pivots together with the front fork 14 around the steering shaft 18. The headlamp 36 has the high beam lamp 63 and the low beam lamp 64. The high beam lamp 63 and the low beam lamp 64 are both LED lamps that include LED light sources. The headlamp 36 can thus be made compact and an inertial moment of the headlamp 36 can be reduced.

Further, the central portion of the low beam lamp 64 and the central portion of the high beam lamp 63 are positioned at the vehicle center WO. The high beam lamp 63 and the low beam lamp 64 are thus disposed closer to the steering shaft 18 not only in the front-rear direction but also in the vehicle width direction. The inertial moment of the headlamp 36 can thus be reduced further.

Also, light from a light source spreads with distance from the light source. The low beam lamp 64 illuminates a range closer to the vehicle than the high beam lamp 63. The light from the low beam lamp 64 is thus smaller in spread than the light from the high beam lamp 63. The dimension of the low beam lamp 64 in the vehicle width direction is greater than the dimension of the high beam lamp 63 in the vehicle width direction. The low beam lamp 64 can thus illuminate an intended range reliably with a simple structure.

By making the headlamp 36 thin in the front-rear direction, the headlamp 36 can be disposed closer to the rider's riding position. Further, the high beam lamp 63 is disposed closer to the rider sitting on the main seat 23 because the head pipe 3 and the steering shaft 18 extend rearward and upward, and the high beam lamp 63 is disposed above the low beam lamp 64. In a case where the rider checks whether or not the high beam lamp 63 is lighting by looking at the high beam lamp 63, if the headlamp 36 is too close to the rider's riding position, the rider might have difficulty checking the lighting state with the conventional headlamp, because a movement amount of the rider's line of sight will be large.

With the present preferred embodiment, the lamp cover 62 is provided with the extension portion 91, through which light is not transmitted. The light of the low beam lamp 64 is not transmitted through the extension portion 91. Therefore, when the high beam lamp 63 is not lit and the low beam lamp 64 is lit, the outer surface of the extension portion 91 will not shine. On the other hand, the extension portion 91 is disposed in front of the high beam cover 78h in plan view and therefore if the rider looks at the high beam lamp 63 from thereabove when the high beam lamp 63 is lit, not only the high beam cover 78h but the outer surface of the extension portion 91 will also appear to shine because the light of the high beam lamp 63 is reflected at the outer surface of the extension portion 91.

The rider can thus check whether or not the high beam lamp 63 is lighting by looking at the state of at least one of the high beam cover 78h and the extension portion 91. Further, by providing the extension portion 91, a portion by which whether or not the high beam lamp 63 is lit is judged is enlarged in area, enabling the rider to readily check the lighting state of the high beam lamp 63. Yet further, the extension portion 91 that enables the lighting state of the high beam lamp 63 to be checked is disposed in front of the high beam cover 78h in plan view and therefore the rider can judge whether or not the high beam lamp 63 is lit without looking at the high beam cover 78h. The movement amount of the rider's line of sight can thus be reduced.

With the present preferred embodiment, the flashers 37 are disposed at a high position so that at least a portion of the flashers 37 is positioned higher than the upper ends 15u of the front suspensions 15. Therefore, when the rider checks the lighting of the high beam lamp 63, the light of the flashers 37 is unlikely to enter the rider's eyes. The rider can thus readily check the lighting of the high beam.

With the present preferred embodiment, the high beam cover 78h of the high beam lamp 63 is disposed further in front than a front end 16f of the under bracket 16 in side view. If the high beam lamp 63 is too close to the rider's riding position in the front-rear direction, the movement amount of the rider's line of sight when the rider looks at the high beam lamp 63 will be large and it may thus be difficult for the rider to check the lighting of the high beam lamp 63. With the present preferred embodiment, the high beam lamp 63 is disposed at a position in front and the rider can thus check the lighting of the high beam readily.

With the present preferred embodiment, the meter 39 and the meter cover 38 are disposed in front of the steering handle 8. The meter cover 38 is disposed further to the rear than the rear end 63r of the high beam lamp 63 in plan view and the line of sight of the rider attempting to look at the high beam lamp 63 is thus unlikely to be blocked by the meter cover 38. Therefore, even when the meter 39 and the meter cover 38 are included, the lighting of the high beam can be checked readily.

With the present preferred embodiment, the extension portion 91 is positioned in front of the high beam lamp 63 in plan view. If the extension portion 91 is short in the front-rear direction, it may be difficult to check the lighting state of the high beam lamp 63. The dimension X2 of the extension portion 91 in the front-rear direction is greater than the dimension X4 of the extension portion 91 in the up-down direction. In this way, the extension portion 91, that is long in the front-rear direction, is positioned in front of the high beam lamp 63 in plan view, and it is thus unlikely for the checking of the lighting of the high beam lamp 63 to be obstructed by the light of the low beam lamp 64. The lighting state of the high beam lamp 63 can thus be checked readily.

With the present preferred embodiment, the low beam lamp 64 is hidden by the lamp cover 62 and is not visible in plan view. Therefore, when the rider looks at the high beam lamp 63, it is unlikely for the light of the low beam lamp 64 to enter the rider's eyes. The rider can thus readily check whether or not the high beam lamp 63 is lit.

### Other Preferred Embodiments

The present teaching is not restricted to the contents of the preferred embodiments and various modifications of the embodiments are possible.

For example, with the preferred embodiment described above, the case where the tandem seat 24 is a separate member from the main seat 23 was described. However, the tandem seat 24 may be integral with the main seat 23. Also, the tandem seat 24 may be omitted. That is, the straddled vehicle 1 may be a vehicle for single-person riding.

With the preferred embodiment, the case where the high beam cover 78h that is a clear cover of the high beam lamp 63 is integral with the low beam cover 78L that is a clear cover of the low beam lamp 64 was described. However, the high beam cover 78h and the low beam cover 78L may be separate members.

With the preferred embodiment, the case where at least a portion of the flashers 37 is positioned higher than the upper ends 15u of the front suspensions 15 was described. However the entirety of the flashers 37 may be disposed lower than the upper ends 15u of the front suspensions 15.

With the preferred embodiment, the case where the high beam cover 78h of the high beam lamp 63 is disposed further in front than the front end 16f of the under bracket 16 in side view was described. However, at least a portion of the high beam cover 78h may be disposed further to the rear than the front end 16f of the under bracket 16.

With the preferred embodiment, the case where the meter cover 38 is disposed further to the rear than the rear end 63r of the high beam lamp 63 in plan view was described. However, at least a portion of the meter cover 38 may be disposed further to the front than the rear end 63r of the high beam lamp 63. Also, the meter cover 38 may be omitted.

With the preferred embodiment, the case where the dimension X2 of the extension portion 91 in the front-rear direction is greater than the dimension X4 of the extension portion 91 in the up-down direction was described. However, the dimension X2 of the extension portion 91 in the front-rear direction may be not greater than the dimension X4 of the extension portion 91 in the up-down direction.

With the preferred embodiment, the case where the low beam lamp 64 is not visible in plan view was described. However, the low beam lamp 64 may be visible in plan view.

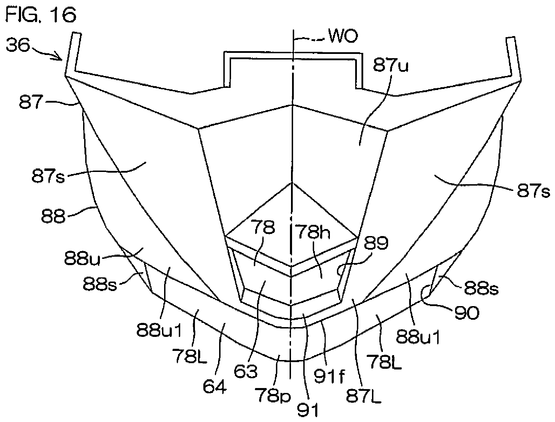

Specifically, as shown in FIG. 16, the low beam lamp 64 may be disposed at a position where the low beam lamp 64 is visible in plan view. With this arrangement, in plan view, the low beam lamp 64 is disposed in front of the extension portion 91 and the high beam lamp 63 is disposed behind the extension portion 91. That is, the high beam lamp 63 and the low beam lamp 64 are partitioned from each other by the extension portion 91 through which light is not transmitted. It is thus unlikely for the checking of the lighting of the high beam lamp 63 to be obstructed by the light of the low beam lamp 64. The lighting state of the high beam lamp 63 can thus be checked readily.

In the preferred embodiments, a case where the straddled vehicle 1 is a sport-type motorcycle is described. However, the straddled vehicle 1 may be a scooter type motorcycle. The straddled vehicle 1 is not limited to a motorcycle, but may be a straddled vehicle including not less than 3 wheels or an all-terrain vehicle.

Two or more of any of the arrangements described above may be combined.

## Claims

1. A straddled vehicle (1) comprising:
a head pipe (3) disposed at a vehicle center (WO) in a vehicle width direction and extending rearward and upward;
a main seat (23) disposed further to the rear than the head pipe (3) and on which a rider sits;
a front fork (14) including a steering shaft (18) that is inserted in the head pipe (3) and extends rearward and upward;
a front wheel supported by the front fork (14);
a steering handle (8) to be operated by the rider to pivot the front fork (14) around the steering shaft (18); and
a headlamp (36) at least a portion of which is disposed in front of the head pipe (3); and wherein
the headlamp (36) is mounted on the front fork (14) such that the headlamp (36) pivots together with the front fork (14) in accordance with an operation of the steering handle (8), and the headlamp (36) includes a lamp cover (62) at least a portion of which is disposed in front of the head pipe (3) and
**characterized in that**
the headlamp (36) includes
a high beam lamp (63) including a high beam LED light source (71) and a high beam cover (78h) disposed in front of the high beam LED light source (71) and through which light of the high beam LED light source (71) is transmitted,
a low beam lamp (64) at least a portion of which is disposed below the high beam lamp (63) and including a low beam LED light source (73) and a low beam cover (78L) disposed in front of the low beam LED light source (73) and through which light of the low beam LED light source (73) is transmitted and the high beam lamp (63) and the low beam lamp (64) are disposed in the lamp cover (62), and
in a front view of the straddled vehicle (1), the dimension of the high beam lamp (63) in a vehicle width direction is smaller than the dimension of the low beam lamp (64) in the vehicle width direction,
at least a portion of the high beam lamp (63) and at least a portion of the low beam lamp (64) are positioned at the vehicle center (WO), and
the lamp cover (62) includes an extension portion (91) which is disposed in front of the high beam cover (78h) in a plan view of the straddled vehicle (1) and through which light is not transmitted.

2. A straddled vehicle (1) according to Claim 1, wherein the front fork (14) includes two front suspensions (15) disposed respectively at a right side and a left side of the front wheel, and
the straddled vehicle (1) further comprises: a flasher (37) at least a portion of which is disposed higher than upper ends (15u) of the two front suspensions (15) in the front view of the straddled vehicle (1).

3. A straddled vehicle (1) according to Claim 1 or 2, wherein the front fork (14) includes two front suspensions (15) disposed respectively at a right side and a left side of the front wheel, an under bracket (16) coupled to the two front suspensions (15), and a top bracket (17) coupled to the two front suspensions (15) above the under bracket (16), and
the high beam cover (78h) of the high beam lamp (63) is disposed further in front than a front end (16f) of the under bracket (16) in a side view of the straddled vehicle (1).

4. A straddled vehicle (1) according to any one of Claims 1 to 3, wherein
the straddled vehicle (1) further comprises:
a meter (39) disposed in front of the steering handle (8) and displaying information on the straddled vehicle (1); and
a meter cover (38) disposed in front of the meter (39) and positioned above the lamp cover (62); and
wherein the meter cover (38) is disposed further to the rear than the extension portion (91) in the plan view of the straddled vehicle (1).

5. A straddled vehicle (1) according to Claim 4, wherein the meter cover (38) is disposed further to the rear than a rear end (63r) of the high beam lamp (63) in the plan view of the straddled vehicle (1).

6. A straddled vehicle (1) according to any one of Claims 1 to 5, wherein a dimension (X2) of the extension portion (91) in the vehicle front-rear direction is greater than a dimension (X4) of the extension portion (91) in a vehicle up-down direction.

7. A straddled vehicle (1) according to any one of Claims 1 to 6, wherein the low beam lamp (64) is disposed at a position at which the low beam lamp (64) is hidden by the lamp cover (62) in the plan view of the straddled vehicle (1).

8. A straddled vehicle (1) according to any one of Claims 1 to 7, wherein the low beam lamp (64) is disposed in front of the extension portion (91) in the plan view of the straddled vehicle (1).

## Patentansprüche

1. Spreizsitz-Fahrzeug (1), das umfasst:
ein Steuerrohr (3), das in einer Fahrzeugmitte (WO) in einer Fahrzeug-Breitenrichtung angeordnet ist und sich nach hinten und nach oben erstreckt;
einen Hauptsitz (23), der weiter hinten angeordnet ist als das Steuerrohr (3) und auf dem ein Fahrer sitzt;
eine Vorderradgabel (14), die eine Lenkwelle (18) enthält, die in das Steuerrohr (3) eingeführt ist und sich nach hinten und nach oben erstreckt;
ein über die Vorderradgabel (14) gelagertes Vorderrad;
einen Lenker (8), der von dem Fahrer betätigt wird, um die Vorderradgabel (14) um die Lenkwelle (18) herum zu schwenken; sowie
einen Scheinwerfer (36), von dem wenigstens ein Abschnitt vor dem Steuerrohr (3) angeordnet ist; und wobei
der Scheinwerfer (36) an der Vorderradgabel (14) so angebracht ist, dass der Scheinwerfer (36) entsprechend einer Betätigung des Lenkers (8) zusammen mit der Vorderradgabel (14) geschwenkt wird, und
der Scheinwerfer (36) eine Leuchtenverkleidung (62) enthält, von der wenigstens ein Teil vor dem Steuerrohr (3) angeordnet ist, und
**dadurch gekennzeichnet, dass**
der Scheinwerfer (36) einschließt:
eine Fernlicht-Leuchte (63), die eine Fernlicht-LED-Lichtquelle (71) sowie eine Fernlicht-Verkleidung (78h) einschließt, die vor der Fernlicht-LED-Lichtquelle (71) angeordnet ist und durch die Licht der Fernlicht-LED-Lichtquelle (71) durchgelassen wird,
eine Abblendlicht-Leuchte (64), von der wenigstens ein Abschnitt unterhalb der Fernlicht-Leuchte (63) angeordnet ist und die eine Abblendlicht-LED-Lichtquelle (73) sowie eine Abblendlicht-Verkleidung (78L) einschließt, die vor der Abblendlicht-LED-Lichtquelle (73) angeordnet ist und durch die Licht der Abblendlicht-LED-Lichtquelle (73) durchgelassen wird, und
wobei die Fernlicht-Leuchte (63) und die Abblendlicht-Leuchte (64) in der Leuchtenverkleidung (62) angeordnet sind, und
die Abmessung der Fernlicht-Leuchte (63) in einer Fahrzeug-Breitenrichtung, in einer Vorderansicht des Spreizsitz-Fahrzeugs (1), kleiner ist als die Abmessung der Abblendlicht-Leuchte (64) in der Fahrzeug-Breitenrichtung,
wenigstens ein Abschnitt der Fernlicht-Leuchte (63) und wenigstens ein Abschnitt der Abblendlicht-Leuchte (64) in der Fahrzeugmitte (WO) positioniert sind, und
die Leuchtenverkleidung (62) einen Verlängerungsabschnitt (91) enthält, der, in einer Draufsicht auf das Spreizsitz-Fahrzeug (1) vor der Fernlicht-Verkleidung (78h) angeordnet ist und durch den kein Licht durchgelassen wird.

2. Spreizsitz-Fahrzeug (1) nach Anspruch 1, wobei die Vorderradgabel (14) zwei Vorderradaufhängungen (15) aufweist, die an einer rechten Seite bzw. einer linken Seite des Vorderrades angeordnet sind, und
das Spreizsitz-Fahrzeug (1) des Weiteren eine Blinkleuchte (37) umfasst, von der wenigstens ein Abschnitt, in der Vorderansicht des Spreizsitz-Fahrzeugs (1), höher angeordnet ist als obere Enden (15u) der zwei Vorderradaufhängungen (15).

3. Spreizsitz-Fahrzeug (1) nach Anspruch 1 oder 2, wobei die Vorderradgabel (14) zwei Vorderradaufhängungen (15), die an einer rechten Seite bzw. einer linken Seite des Vorderrades angeordnet sind, einen unteren Halter (16), der mit den zwei Vorderradaufhängungen (15) gekoppelt ist, sowie einen oberen Halter (17) einschließt, der mit den zwei Vorderradaufhängungen (15) oberhalb des unteren Halters (16) gekoppelt ist, und
die Fernlicht-Verkleidung (78h) der Fernlicht-Leuchte (63), in einer Seitenansicht des Spreizsitz-Fahrzeugs (1), weiter vorn angeordnet ist als ein vorderes Ende (16f) des unteren Halters (16).

4. Spreizsitz-Fahrzeug (1) nach einem der Ansprüche 1 bis 3, wobei das Spreizsitz-Fahrzeug (1) des Weiteren umfasst:
eine Anzeige (39), die vor dem Lenkgriff (8) angeordnet ist und Informationen über das Spreizsitz-Fahrzeug (1) anzeigt; sowie
eine Anzeige-Verkleidung (38), die vor der Anzeige(39) angeordnet ist und oberhalb der Leuchtenverkleidung (62) positioniert ist; und
wobei die Anzeige-Verkleidung (38), in der Draufsicht auf das Spreizsitz-Fahrzeug (1), weiter hinten angeordnet ist als der Verlängerungsabschnitt (91).

5. Spreizsitz-Fahrzeug (1) nach Anspruch 4, wobei die Anzeige-Verkleidung (38), in der Draufsicht auf das Spreizsitz-Fahrzeug (1), weiter hinten angeordnet ist als ein hinteres Ende (63r) der Fernlicht-Leuchte (63).

6. Spreizsitz-Fahrzeug (1) nach einem der Ansprüche 1 bis 5, wobei eine Abmessung (X2) des Verlängerungsabschnitts (91) in der horizontalen Richtung des Fahrzeugs größer ist als eine Abmessung (X4) des Verlängerungsabschnitts (91) in einer vertikalen Richtung des Fahrzeugs.

7. Spreizsitz-Fahrzeug (1) nach einem der Ansprüche 1 bis 6, wobei die Abblendlicht-Leuchte (64) an einer Position angeordnet ist, an der die Abblendlicht-Leuchte (64), in der Draufsicht auf das Spreizsitz-Fahrzeug (1), durch die Leuchtenverkleidung (62) verdeckt ist.

8. Spreizsitz-Fahrzeug (1) nach einem der Ansprüche 1 bis 7, wobei die Abblendlicht-Leuchte (64), in der Draufsicht auf das Spreizsitz-Fahrzeug (1), vor dem Verlängerungsabschnitt (91) angeordnet ist.

## Revendications

1. Véhicule à enfourcher (1) comprenant :
un tube frontal (3) disposé au centre du véhicule (WO) dans le sens de la largeur du véhicule et s'étendant vers l'arrière et vers le haut ;
un siège principal (23) disposé plus vers l'arrière que le tube frontal (3) et sur lequel un conducteur s'assied ;
une fourche avant (14) comprenant un colonne de direction (18) qui est inséré dans le tube frontal (3) et s'étend vers l'arrière et vers le haut ;
une roue avant soutenue par la fourche avant (14) ;
une poignée de direction (8) destinée à être actionnée par le conducteur pour faire pivoter la fourche avant (14) autour de la colonne de direction (18) ; et
un phare (36) dont une partie au moins est disposée devant le tube frontal (3) ; et où
le phare (36) est monté sur la fourche avant (14) de telle sorte que le phare (36) pivote avec la fourche avant (14) conformément à un actionnement de la poignée de direction (8) et
le phare (36) comprend un capot de phare (62) dont une partie au moins est disposée devant le tube frontal (3) et
**caractérisé en ce que**
le phare (36) comprend
un feu de route (63) comprenant une source de lumière LED (71) de feu de route et un capot de feu de route (78h) disposé devant la source de lumière LED (71) de feu de route et à travers lequel la lumière de la source de lumière LED (71) de feu de route est transmise,
un feu de croisement (64) dont une partie au moins est disposée sous le feu de route (63) et comprenant une source de lumière LED (73) de feu de croisement et un couvercle de feu de croisement (78L) disposé devant la source de lumière LED (73) de feu de croisement et par laquelle la lumière de la source de lumière LED (73) de feu de croisement est transmise et
le feu de route (63) et le de feu de croisement (64) sont disposés dans le capot de phare (62), et
dans une vue de face du véhicule à enfourcher (1), la dimension du feu de route (63) dans le sens de la largeur du véhicule est inférieure à la dimension du feu de croisement (64) dans le sens de la largeur du véhicule,
au moins une partie du feu de route (63) et au moins une partie du feu de croisement (64) sont placées au centre du véhicule (WO), et
le capot de phare (62) comprend une partie de rallonge (91) qui est disposée devant le capot de feu de route (78h) dans une vue en plan du véhicule à enfourcher (1) et à travers lequel la lumière n'est pas transmise.

2. Véhicule à enfourcher (1) selon la revendication 1, où le tube frontal (14) comprend deux suspensions avant (15) disposées respectivement sur un côté droit et un côté gauche de la roue avant, et
le véhicule à enfourcher (1) comporte en outre : un clignotant (37) dont au moins une partie est disposée plus haut que les extrémités supérieures (15u) des deux suspensions avant (15) dans la vue de face du véhicule à enfourcher (1).

3. Véhicule à enfourcher (1) selon la revendication 1 ou 2, où le tube frontal (14) comprend deux suspensions avant (15) disposées respectivement sur un côté droit et un côté gauche de la roue avant, un té inférieur (16) couplé aux deux suspensions avant (15) et un té supérieur (17) couplé aux deux suspensions avant (15) au-dessus du té inférieur (16), et
le capot de feu de route (78h) du feu de route (63) est disposé plus en avant qu'une extrémité avant (16f) du té inférieur (16) dans une vue latérale du véhicule à enfourcher (1).

4. Véhicule à enfourcher (1) selon l'une quelconque des revendications 1 à 3, où le véhicule à enfourcher (1) comporte en outre :
un compteur (39) disposé en avant de la poignée de direction (8) et affichant des informations sur le véhicule à enfourcher (1) ; et
un capot de compteur (38) disposé devant le compteur (39) et positionné au-dessus du capot de phare (62) ; et
où le capot de compteur (38) est disposé plus vers l'arrière que la partie de rallonge (91) dans une vue en plan du véhicule à enfourcher (1).

5. Véhicule à enfourcher (1) selon la revendication 1, où le capot de compteur (38) est disposé plus vers l'arrière que l'extrémité arrière (63r) du feu de route (63) dans la vue en plan du véhicule à enfourcher (1).

6. Véhicule à enfourcher (1) selon l'une quelconque des revendications 1 à 5, où une dimension (X2) de la partie de rallonge (91) dans la direction avant-arrière du véhicule est plus grande qu'une dimension (X4) de la partie de rallonge (91) dans la direction de haut en bas du véhicule.

7. Véhicule à enfourcher (1) selon l'une quelconque des revendications 1 à 6, où le feu de croisement (64) est disposé en une position où le feu de croisement (64) est caché par le capot de phare (62) dans la vue en plan du véhicule à enfourcher (1).

8. Véhicule à enfourcher (1) selon l'une quelconque des revendications 1 à 7, où le feu de croisement est disposé devant la partie de rallonge (91) dans la vue en plan du véhicule à enfourcher (1).
